# EUROPEAN PATENT APPLICATION

(11) **EP 2 020 783 A1**
(43) Date of publication of application: **04.02.2009**
(21) Application number: 07742763.1
(22) Date of filing: 01.05.2007
(51) Int. Cl.: H04L 12/56, H04Q 7/22, H04Q 7/38

(54) **MOBILE COMMUNICATION CONTROL SYSTEM**

(30) Priority: 22.05.2006 JP 2006141670
(71) Applicant: NEC Corporation, Minato-ku Tokyo 108-8001 (JP)
(72) Inventor: AKIYOSHI, Ippei, Tokyo 108-8001 (JP); HARASAKI, Kazuhiko, Tokyo 108-8001 (JP)
(74) Representative: Vossius & Partner
(86) International application number: PCT/JP2007/059328
(87) International publication number: WO 2007/135844

(57) **Abstract**

The present invention is to provide a mobile management communication system which can reduce the number of nodes involved in a packet delivery to a mobile terminal which has access to a home network compared to a packet delivery to a mobile terminal which is roaming and can perform a dynamic change to an anchor node suitable for a service, corresponding to a change of a service type required by a user.

When a mobile terminal 181 which exists on a home link 111 hands over to an external slink 112, an upper location managing means 121 deprives a right to perform packet proxy-receiving processing from a lower location managing means 141 and confers it to a lower location managing means 142, thereby dynamically changing an anchor node.

## Description

### Technical Field

The present invention relates to a mobile communication management system, and more particularly, to a mobile communication management system in which can perform a dynamic change to a more proper anchor node by conferring or depriving a right to perform packet proxy-receiving processing for each IP address of a mobile terminal, corresponding to location information of the mobile terminal.

### Background Art

Conventionally, a hierarchy of mobile communication management is effective in terms of reduction of a round trip time of a control signal for location registration which is performed to a mobility anchor node or reduction of the number of control signals sent to a mobility anchor node or the other party of a communication. A hierarchical mobile communication management system of such a kind performs hierarchical mobile communication management such that a mobile terminal performs location registration to an anchor node of a visiting network or a home network (hereinafter, referred to as "visiting anchor node" or "home anchor node", respectively), as shown in Non Patent Document 1.

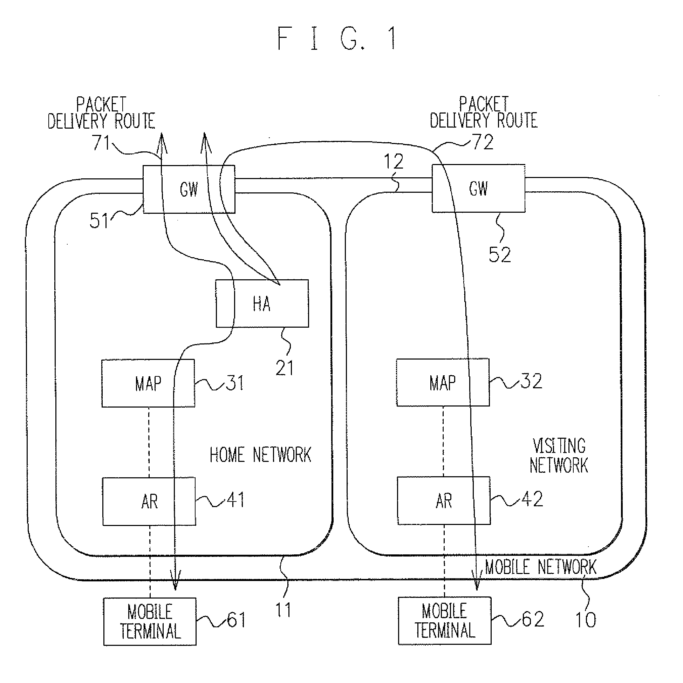

However, in the above-described method, for fear that location information is known to the other party of a communication in a visiting anchor node level when path optimization is performed or for a purpose to reduce control signals for setting a optimum path in a visiting network, a so-called hierarchical edge mobility method which transplants a mobile node function of a mobile Internet Protocol version 6 (IPv6) to an access router (AR) and forms a tunnel individually between a home agent (HA) to a mobility anchor point (MAP) and between a MAP to AR has been suggested, as shown in FIG. 1.

Here, the home anchor node is referred to as a node which includes a function for managing a correspondence relationship (binding information) between an IP address of a mobile terminal and an IP address belonging to a visiting anchor node which the mobile terminal visits, and a function for capturing a packet to be forwarded to the IP address of the mobile terminal, and encapsulating the packet and transferring it to the IP address belonging to the visiting anchor node. Also, the visiting anchor node is referred to as a node which includes a function for managing a correspondence relationship between an IP address of a mobile terminal and an IP address belonging to an access router which the mobile terminal visits, and a function for encapsulating a packet to be forwarded to the IP address of the mobile terminal and transferring the packet to the IP address belonging to the access router. For example, a HA of Mobile IPv6 or Mobile IPv4 functions as a home anchor node, and a MAP of Hierarchical Mobile Ipv6 (HMIPv6) functions as a visiting anchor node.

A mobility management system of a hierarchical edge mobility method shown in FIG. 1 is a system for managing mobility of a mobile terminal 61 or a mobile terminal 62 in a mobile network 10 and includes a HA 21, MAPs 31 and 32, ARs 41 and 42, and GWs 51 and 52. The mobile network 10 includes a home network 11 and a visiting network 12.

The HA 21, the MAP 31, the AR 41, and the GW 51 exist in the home network 11, and the MAP 32, the AR 42, and the GW 52 exist in the visiting network 12. The MAPs 31 and 32 include a mobile node function for the HA 21 and includes a home agent function for the ARs 41 and 42. The ARs 41 and 42 include a mobile node function for setting the MAPs 31 and 32 as home agents. The GWs 51 and 52 are gateways of when a mobile terminal in the mobile network 10 communicates with a mobile terminal which exists in an external network and include a firewall function. The mobile terminals 61 and 62 are mobile terminals which retain an IP address belonging to the HA 21 and have access to the home network 11 and the visiting network 12, respectively.

The conventional mobility management system with the above-described configuration operates as follows. In an initial registration procedure that the mobile terminal starts and then accesses the mobile network, when a location registration request of the mobile terminal is received through the AR and the MAP, in order to capture an IP address of the mobile terminal contained in a location registration request signal, the HA transmits a neighbor cash change request, to all nodes which exist on a link to which the HA has access, for transmitting a packet to an MAC address of the HA if there is a packet to be forwarded to an IP address of the mobile terminal. A mechanism in which another node captures a packet by proxy instead of a node which is actually assigned an IP address is realized by Proxy Address Resolution Protocol (ARP) in case of IPv4 or Proxy Neighbor Discovery Protocol (NDP) in case of IPv6.

After the above processing is performed, the HA suppresses a use of the IP address by a node which tries to use the same IP address as the mobile terminal while capturing a packet to be forwarded to an IP address of the mobile terminal. When the packet to be forwarded to the mobile terminal arrives at the home network, the packet is transferred to the mobile terminal through the HA, the MAP and the AR in the described order according to location information managed respectively by the HA, the MAP and the AR.

The above-described structure does not change when the mobile terminal accesses the home network or the visiting network. In FIG. 1, a packet delivery route 71 represents a packet delivery route of when the mobile terminal 61 is accessing the home network 11, and a packet delivery route 72 represents a packet delivery route of when the mobile terminal 62 is accessing the visiting network 12.

However, in the actual system, since the HA and the MAP in the home network are arranged adjacent to each other, when the mobile terminal is accessing the home network, packet transferring processing from the HA to the MAP will be unnecessarily long.

For example, Patent document 1 discloses a mobile network which includes a home agent server for managing an identifier of a mobile terminal and a plurality of IP tunnel routers, and transmits a packet without passing through the HA. In the mobile network, the home agent server delivers IP tunnel setting information for designating a mobile terminal and transmitting source information to a plurality of IP tunnel routers, and each IP tunnel router receives an IP packet setting a mobile terminal as a transmitting source and transfers the IP packet based on the IP tunnel setting information.
Patent Document 1: W02003/071749
Non Patent Document 1: "Hierarchical Mobile IPv6 Mobility Management (HMIPv6)" by H. Soliman et. al, [on-line], IETF, searched on February 10, 2006, Internet <http://www.ietf.org/rfc/rfc4140.txt>

### Disclosure of the Invention

A first problem is that a node interposed in a packet communication path when a mobile terminal which has access to a home network performs communications is unnecessarily long. The reason is because when a mobile terminal has access to a home network, even though a HA and a MAP are arranged adjacent to each other, a node which captures a packet coming into a home network is only HA, and thus a packet can be transferred to a MAP only through a HA.

A second problem is that when a service provided to a user is changed due to, for example, a change of an access method by a hand over between different kinds of access networks, a network side can not change to an anchor node which includes a function suitable for a service of after a change. The mobile network disclosed in Patent Document 1 performs a packet transmission without passing through the HA by dispersively arranging the anchor node to the access routers, and so it does not relate to a change of the anchor node.

Therefore, it is an exemplary object of the present invention to provide a mobile management communication system which can reduce the number of nodes involved in packet delivery to a mobile terminal which has access to a home network, compared to a packet delivery to a mobile terminal which is roaming, and can perform a dynamic change to an anchor node suitable according to a service, corresponding to a change of a service type required by a user.

In order to achieve the above exemplary objects, the present invention is to provide a mobile communication management system, including: a mobile terminal including a communication function and retaining an IP address on a home network; an upper location managing means which includes a function of managing binding information of the IP address of the mobile terminal and addresses of a lower location managing means and a lower packet transferring means, and a function of managing location information of the mobile terminal; the lower location managing means which includes a function of managing binding information of the IP address of the mobile terminal and location information of the mobile terminal and a function of registering the location information of the mobile terminal to the upper location managing means; and the lower packet transferring means which includes a function of transferring a packet to be forwarded to the IP address of the mobile terminal to the location information of the mobile terminal based on the binding information managed by the lower location managing means and a function of proxy-receiving the packet to be forwarded to the IP address of the mobile terminal, wherein the upper location managing means dynamically changes an anchor node by conferring and depriving a packet receiving right which is a right to perform packet proxy-receiving processing for each IP address of the mobile terminal with respect to the lower location managing means.

The present invention is a mobile communication management system includes a mobile terminal, an upper location managing means, a lower location managing means, and a lower packet transferring means and is characterized in that the upper location managing means includes a function of conferring and depriving a right to perform packet proxy-receiving processing for each IP address of the mobile terminal and dynamically changes an anchor node. For including the function of conferring and depriving the right to perform packet proxy-receiving processing, for example, when a plurality of lower packet transferring means are arranged in a home network, it can confer the right to perform packet proxy-receiving processing to an optimum lower packet transferring means corresponding to a location of the mobile terminal or a service provided to the mobile terminal, thereby enabling to perform a dynamic change to an anchor node suitable for the location or the service.

Further, the present invention is to provide a mobile communication management system, including: a mobile terminal including a communication function and retaining an IP address on a home Network; an upper location managing means which includes a function of managing binding information of the IP address of the mobile terminal and addresses of a lower location managing means and a lower packet transferring means and a function of managing location information of the mobile terminal; an upper packet transferring means which includes a function of transferring a packet to be forwarded to the IP address of the mobile terminal to the lower packet transferring means and a function of proxy-receiving the packet to be forwarded to the IP address of the mobile terminal; the lower location managing means which includes a function of managing binding information of the IP address of the mobile terminal and the location information of the mobile terminal and a function of registering the location information of the mobile terminal to the upper location managing means; and the lower packet transferring means which includes a function of transferring the packet to be forwarded to the IP address of the mobile terminal to the location information of the mobile terminal based on the binding information managed by the lower location managing means and a function of proxy-receiving the packet to be forwarded to the IP address of the mobile terminal, wherein the upper location managing means dynamically changes an anchor node by conferring and depriving a packet receiving right which is a right to perform packet proxy-receiving processing for each IP address of the mobile terminal with respect to the lower location managing means.

The present invention is a mobile communication management system includes a mobile terminal, an upper location managing means, an upper packet transferring means, a lower location managing means, and a lower packet transferring means and is characterized in that the upper location managing means includes a function of conferring and depriving a right to perform packet proxy-receiving processing for each IP address of the mobile terminal and dynamically changes an anchor node. For including the function of conferring and depriving the right to perform packet proxy-receiving processing, for example, when the upper packet transferring means and the lower packet transferring means are arranged in a home network and the mobile terminal moves to the home network from an external network, it confers the right to perform packet proxy-receiving processing to the lower packet transferring means, so that the packet proxy-receiving which has been performed by the upper packet transferring means can be performed by the lower packet transferring means, whereby the number of nodes involved in a packet delivery to the mobile terminal which has access to the home network can be reduced.

According to the present invention, a mobile management communication system which can reduce the number of nodes involved in packet delivery to a mobile terminal which has access to a home network, compared to a packet delivery to a mobile terminal which is roaming, and can perform a dynamic change to an anchor node suitable for a service, corresponding to a change of a service type required by a user can be realized.

### Best Mode for Carrying Out the Invention

Exemplary embodiments of the present invention are described below with reference to the attached drawings.

### <First Exemplary Embodiment>

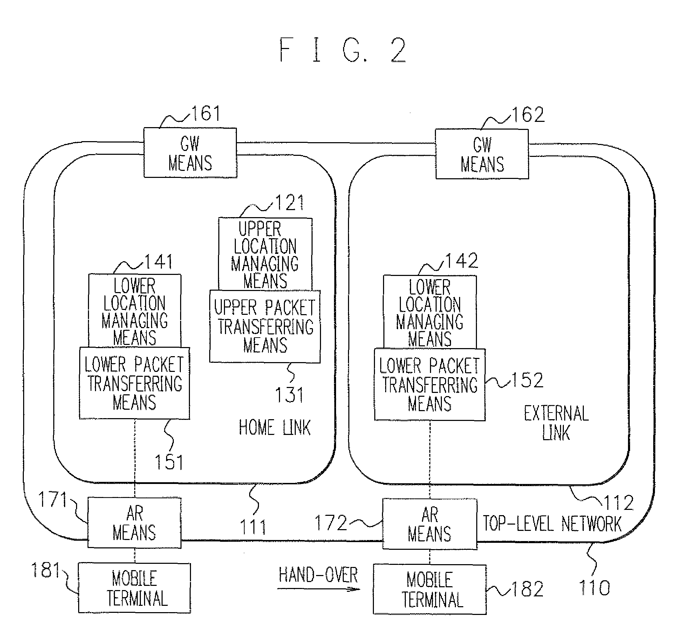

A first exemplary embodiment of the present invention is described with reference to FIGs. 2 to 4. FIG. 2 is a schematic diagram illustrating a mobile communication management system according to the first exemplary embodiment of the present invention. The mobile communication management system according to the first exemplary embodiment of the present invention includes an upper location managing means 121, an upper packet transferring means 131, lower location managing means 141 and 142, lower packet transferring means 151 and 152, GW means 161 and 162, AR means 171 and 172, and mobile terminals 181 and 182. The above components comprise a top-level network 110, and the top-level network 110 includes a home link 111 and an external link 112. Here, "link" means a network which shares a sub network.

The upper location managing means 121, the upper packet transferring means 131, the lower location managing means 141, the lower packet transferring means 151, and the GW means 161 exist in the home link 111. The lower location managing means 142, the lower packet transferring means 152, and the GW means 162 exist in the external link 112.

The upper location managing means 121 includes a function of managing binding information of IP addresses of the mobile terminals 181 and 182, and the lower location managing means 141 and 142 and the lower packet transferring means 151 and 152 which manage the mobile terminals 181 and 182. The upper location managing means 121 includes a function of performing a path control to the upper packet transferring means 131, a function of performing a packet proxy-receiving control to the upper packet transferring means 131, and a function of conferring/depriving a packet proxy-receiving right to/from the lower location managing means 141 and 142.

The upper packet transferring means 131 includes a function of encapsulating a packet to be forwarded to the IP addresses of the mobile terminals 181 and 182 and transferring it to the lower packet transferring means 151 and 152, and a function of proxy-receiving the packet to be forwarded to the IP addresses of the mobile terminals 181 and 182.

The lower location managing means 141 and 142 includes a function of managing binding information of the IP addresses of the mobile terminals 181 and 182 and the AR means 171 and 172 which the mobile terminals 181 and 182 are accessing. The lower location managing means 141 and 142 also include a function of registering location information of the mobile terminals 181 and 182 to the upper location managing means 121, a function of performing a path control to the lower packet transferring means 151, and a function of performing a packet proxy-receiving control to the lower packet transferring means 151.

The lower packet transferring means 151 and 152 include a function of encapsulating the packet transmitted from the mobile terminals 181 and 182 and transferring it to the upper packet transferring means 131, a function of transferring the packet to be forwarded to the IP addresses of the mobile terminals 181 and 182 to the AR means 171 and 172, and a function of proxy-receiving the packet to be forwarded to the IP addresses of the mobile terminals 181 and 182.

The GW means 161 and 162 are gateways of when the mobile terminals 181 and 182 which have access to the top-level network 110 communicate with a mobile terminal which exists in an external network and include a firewall function.

The AR means 171 and 172 include a function for registering location information of the mobile terminals 181 and 182 to the lower location managing means 141 and 142, a function of encapsulating the packet transmitted from the mobile terminals 181 and 182 and transferring it to the lower packet transferring means 151 and 152, and a function of transferring the packet to be forwarded to the IP addresses of the mobile terminals 181 and 182 to the mobile terminals 181 and 182.

The mobile terminals 181 and 182 are mobile terminals which retain an IP address with the same prefix as the home link 111, and have access to the home link 111 and the external link 112, respectively.

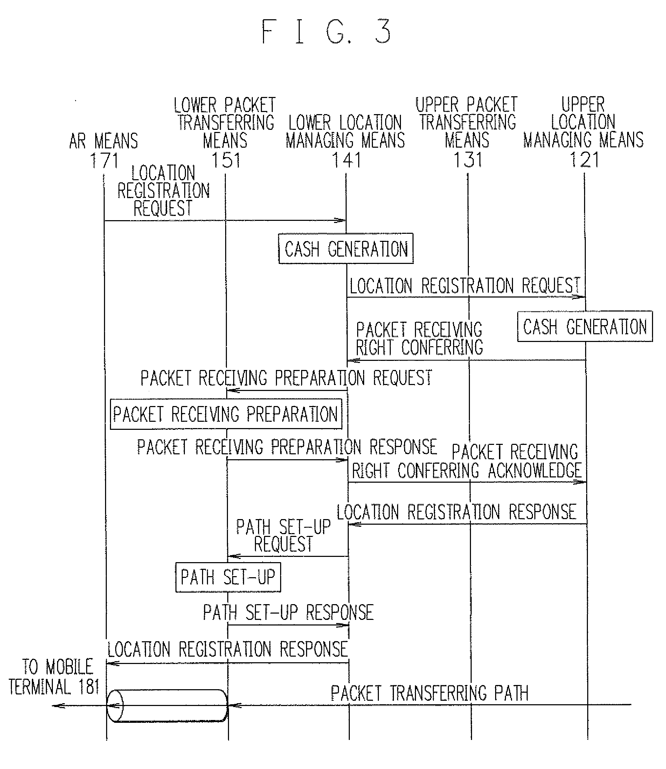

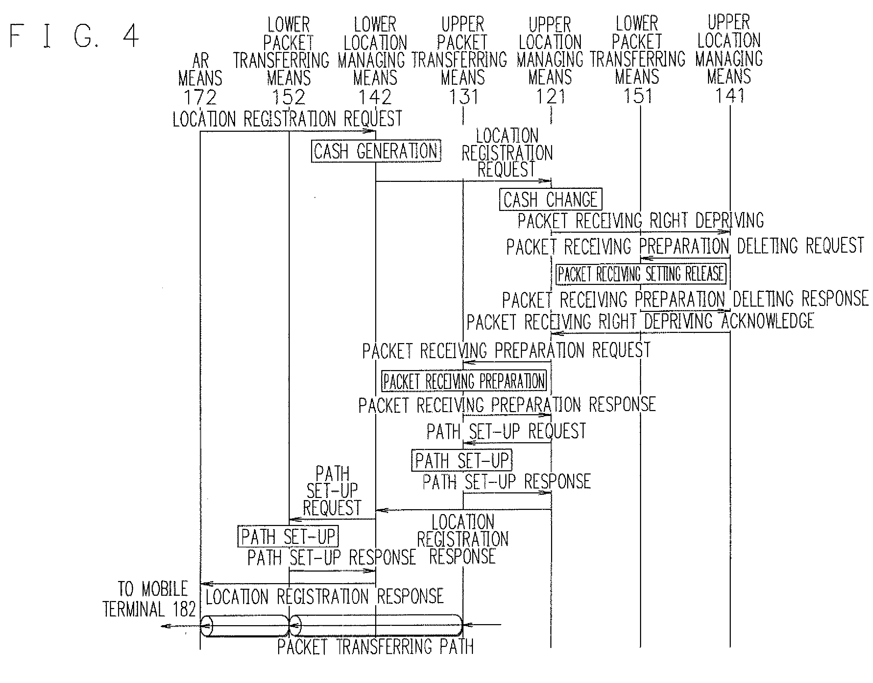

Next, an overall operation according to the first exemplary embodiment of the present invention is described in detail with reference to FIGs. 3 and 4. FIG. 3 is a sequence diagram illustrating a flow of a location registration operation of a mobile terminal in the mobile communication management system according to the first exemplary embodiment of the present invention, and shows a procedure that the mobile terminal 181 which has access to the home link 111 performs location registration to the upper location managing means 121 through the lower location managing means 141.

First, when the mobile terminal 181 accesses the AR means 171, the AR means 171 transmits a location registration request containing binding information of an IP address of the mobile terminal 181 and an address of the AR means 171 to the lower location managing means 141.

The lower location managing means 141 receive the location registration request and then generates a cash for the binding information of the IP address of the mobile terminal 181 and the address of the AR means 171, and transmits a location registration request containing binding information of the IP address of the mobile terminal 181 and addresses of the lower location managing means 141 and the lower packet transferring means 151 to the upper location managing means 121.

The upper location managing means 121 receives the location registration request and then generates a cash for the binding information of the IP address of the mobile terminal 181 and the addresses of the lower location managing means 141 and the lower packet transferring means 151. The upper location managing means 121 compares a prefix of the upper packet transferring means 131 to a prefix of the lower packet transferring means 151, and transmits a packet receiving right conferring message to the lower location managing means 141 if it is determined that the lower packet transferring means 151 is in the same home link 111 as the upper packet transferring means 131.

The lower location managing means 141 receives the packet receiving right conferring message and then transmits a packet receiving preparation request to the lower packet transferring means 151 to perform preparation for capturing (receiving) a packet to be forwarded to the mobile terminal 181. The lower packet transferring means 151 transmits a packet receiving preparation response to the lower location managing means 141 when packet receiving preparation is completed, and the lower location managing means 141 which has received the response transmits a packet receiving right conferring acknowledge message to the upper location managing means 121 to thereby notify that the packet receiving preparation is completed.

The upper location managing means 121 receives the packet receiving right conferring acknowledge message and then transmits a location registration response to the lower location managing means 141 to thereby notify that the location registration of the mobile terminal 181 is completed.

The lower location managing mean 141 receives the location registration response and then transmits a path set-up request to the lower packet transferring means 151 to perform a path set-up so that the packet to be forwarded to the mobile terminal 181 can be encapsulated and transferred to the AR means 171. The lower packet transferring means 151 transmits a path set-up response to the lower location managing means 141 when the path set-up is completed, and the lower location managing means 141 which has received the response transmits the location registration response to the AR means 171, thereby completing the location registration procedure.

By the above-described procedure, the packet to be forwarded to the mobile terminal 181 which has arrived at the home link 111 can be transferred to the mobile terminal 181 without intervention of the upper packet transferring means 121.

FIG. 4 is a sequence diagram illustrating a flow of a location registration operation of the mobile terminal in the mobile communication management system according to the first exemplary embodiment of the present invention, and shows a procedure that the mobile terminal 182 which has access to the home link 111 hands over to the external link 112 and the location registration to the upper location managing means 121 is performed through the lower location managing means 142.

First, when the mobile terminal 182 accesses the AR means 172, the AR means 172 transmits a location registration request containing binding information of an IP address of the mobile terminal 182 and an address of the AR means 172 to the lower location managing means 142.

The lower location managing means 142 receives the location registration request and then generates a cash for the binding information of the IP address of the mobile terminal 182 and the address of the AR means 172, and transmits a location registration request containing binding information of the IP address of the mobile terminal 182 and addresses of the lower location managing means 142 and the lower packet transferring means 152 to the upper location managing means 121.

The upper location managing means 121 receives the location registration request and then changes a cash content of the mobile terminal 182 to the binding information of the IP address of the mobile terminal 181 and the addresses of the lower location managing means 142 and the lower packet transferring means 152. The upper location managing means 121 compares a prefix of the upper packet transferring means 131 to a prefix of the lower packet transferring means 152, and transmits a packet receiving right depriving message to the lower location managing means 141 in order to release packet receiving setting of the lower packet transferring means 151 which has captured a packet to be forwarded to the mobile terminal 182 until then if it is determined that the lower packet transferring means 152 is in the different external link 112 from the upper packet transferring means 131.

The lower location managing means 141 receives the packet receiving right depriving message and then transmits a packet receiving preparation deleting request to the lower packet transferring means 151 to release the packet receiving setting. The lower packet transferring means 151 transmits a packet receiving preparation deleting response to the lower location managing means 141 after the packet receiving setting is completely released, and the lower location managing means 141 which has received the response transmits a packet receiving right depriving acknowledge message to the upper location managing means 121.

The upper location managing means 121 receives the packet receiving right depriving acknowledge message and then transmits a packet receiving preparation request to the upper packet transferring means 131 to perform preparation for capturing the packet to be forwarded to the mobile terminal 182. The upper packet transferring means 131 transmits a packet receiving preparation response to the upper location managing means 121 after the packet receiving preparation is completed, and the upper location managing means 121 which has received the response transmits a path set-up request to the upper packet transferring means 131 to perform a path set-up so that the packet to be forwarded to the mobile terminal 182 can be encapsulated and transferred to the lower packet transferring means 152. The upper packet transferring means 131 transmits a path set-up response to the upper location managing means 121 after the path set-up is completed, and the upper location managing means 121 which has received the response transmits a location registration response to the lower location managing means 142.

The lower location managing mean 142 receives the location registration response and then transmits a path set-up request to the lower packet transferring means 152 to perform two kinds of path set-up: a set-up for encapsulating the packet to be forwarded to the mobile terminal 182 and transferring it to the AR means 172; and a set-up for encapsulating the packet transferred from the mobile terminal 182 and transferring it to the upper packet transferring means 131. The lower packet transferring means 152 transmits the path set-up response to the lower location managing means 142 after the path set-up is completed, and the lower location managing means 142 which has received the response transmits the location registration response to the AR means 172, thereby completing the location registration procedure.

By the above-described procedure, the packet to be forwarded to the mobile terminal 182 which has arrived at the home link 111 can be transferred to the mobile terminal 182 through the upper packet transferring means 131.

### (Effect)

In the first exemplary embodiment of the present invention, since the upper packet transferring means and the lower packet transferring means are arranged together in the home link, and the upper location managing means confers a right to capture a packet to be forwarded to the mobile terminal to the upper packet transferring means and the lower packet transferring means, depending on a location of the mobile terminal, when the location of the mobile terminal is managed by the lower location managing means arranged in the home link, a packet can be transferred to the mobile terminal without intervention of the upper packet transferring means.

### <Second Exemplary Embodiment>

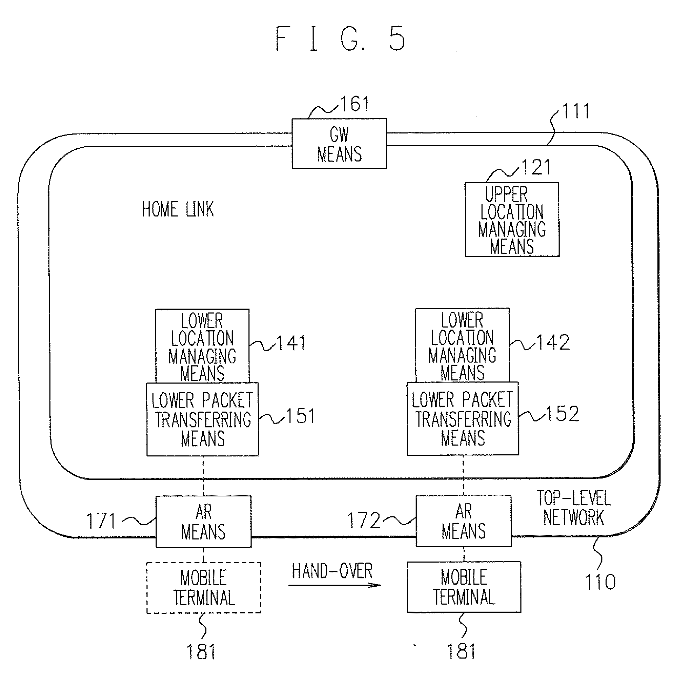

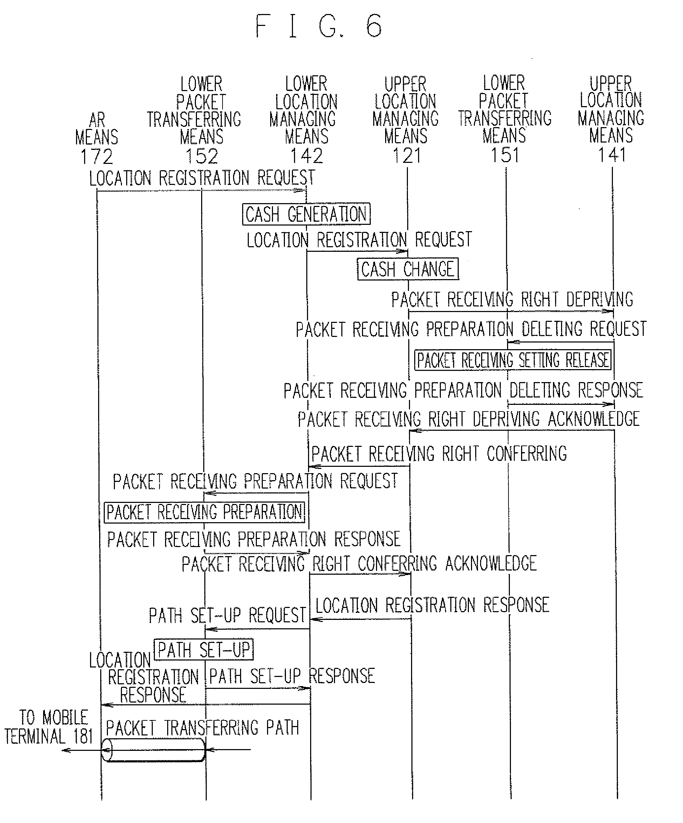

Next, a second exemplary embodiment of the present invention is described below with reference to Fig. 5 and 6. The second exemplary embodiment of the present invention is different from the first exemplary embodiment of the present invention in the fact that the upper packet transferring means is not in a home link 111, and a plurality of lower location managing means and a plurality of lower packet transferring mean are arranged in the home link 111.

FIG. 5 is a schematic diagram illustrating a mobile communication management system according to the second exemplary embodiment of the present invention. The mobile communication management system according to the second exemplary embodiment of the present invention includes an upper location managing means 121, lower location managing means 141 and 142, lower packet transferring means 151 and 152, a GW means 161, AR means 171 and 172, and a mobile terminal 181. The above components comprise a top-level network 110, and the top-level network 110 includes a home link 111.

The upper location managing means 121, the lower location managing means 141 and 142, the lower packet transferring means 151 and 152, and the GW means 161 exist in the home link 111.

The upper location managing means 121 includes a function of managing binding information of the lower location managing means 141 and 142 and the lower packet transferring means 151 and 152 which manage the mobile terminals 171 and 172, and IP address of the mobile terminals 181 and 182. The upper location managing means 121 includes a function of performing a packet proxy-receiving control to the upper packet transferring means 131, and a function of conferring/depriving a packet proxy-receiving right to/from the lower location managing means 141 and 142.

Functions of the lower location managing means 141 and 142, the lower packet transferring means 151 and 152, the GW means 161, and the AR means 171 and 172 are the same as those in the first exemplary embodiment of the present invention.

An overall operation according to the second exemplary embodiment of the present invention is described with reference to FIG. 6. FIG. 6 is a sequence diagram illustrating a flow of a hand-over of the mobile terminal in the mobile communication management system according to the second exemplary embodiment of the present invention, and shows a procedure that the mobile terminal 181 which has access to the home link 111 hands over to the AR means 172 from the AR means 171.

First, when the mobile terminal 181 accesses the AR means 172, the AR means 172 transmits a location registration request containing binding information of an IP address of the mobile terminal 181 and an address of the AR means 172 to the lower location managing means 142.

The lower location managing means 142 receives the location registration request and then generates a cash for the binding information of the IP address of the mobile terminal 181 and the address of the AR means 172, and transmits a location registration request containing binding information of the IP address of the mobile terminal 181 and addresses of the lower location managing means 142 and the lower packet transferring means 152 to the upper location managing means 121.

The upper location managing means 121 receives the location registration request and then changes a cash content of the mobile terminal 181 to the binding information of the IP address of the mobile terminal 181 and the addresses of the lower location managing means 142 and the lower packet transferring means 152. The upper location managing means 121 compares the address of the lower packet transferring means 151 registered in a cash before the location registration request is received to the address of the lower packet transferring means 152 registered in a cash after the location registration request is received, and transmits a packet receiving right depriving message to the lower location managing means 141 if it is detected that the lower packet transferring means after the location registration request is received is different from the lower packet transferring means before the location registration request is received.

The lower location managing means 141 receives the packet receiving right depriving message and then transmits a packet receiving preparation deleting request to the lower packet transferring means 151 to release the packet receiving setting. The lower packet transferring means 151 transmits a packet receiving preparation deleting response to the lower location managing means 141 after the packet receiving setting is completely released, and the lower location managing means 141 which has received the response transmits a packet receiving right depriving acknowledge message to the upper location managing means 121.

The upper location managing means 121 receives the packet receiving right depriving acknowledge message and then transmits a packet receiving right conferring message to the lower location managing means 142.

The lower location managing means 142 receives the packet receiving right conferring message and then transmits a packet receiving preparation request to the lower packet transferring means 152 to perform preparation for capturing the packet to be forwarded to the mobile terminal 181. The lower packet transferring means 152 transmits a packet receiving preparation response to the lower location managing means 142 after the packet receiving preparation is completed, and the lower location managing means 142 which has received the response transmits a packet receiving right conferring acknowledge message to the upper location managing means 121 to thereby notify that the packet receiving preparation is completed.

The upper location managing means 121 receives the packet receiving right conferring acknowledge message and then transmits a location registration response to the lower location managing means 142 to thereby notify that the location registration of the mobile terminal 181 is completed.

The lower location managing mean 142 receives the location registration response and then transmits a path set-up request to the lower packet transferring means 152 to perform a path set-up so that the packet to be forwarded to the mobile terminal 181 can be encapsulated and transmitted to the AR means 172. The lower packet transferring means 152 transmits a path set-up response to the lower location managing means 142 after the path set-up is completed, and the lower location managing means 142 which has received the response transmits the location registration response to the AR means 172, thereby completing the location registration procedure.

By the above-described procedure, the packet to be forwarded to the mobile terminal 181 which has arrived at the home link 111 can be transferred to the mobile terminal 181 without intervention of the lower packet transferring means 151.

### (Effect)

In the second exemplary embodiment of the present invention, a plurality of lower packet transferring means are arranged together in the home link, and the upper location managing means confers a right to capture a packet to be forwarded to the mobile terminal to an appropriate lower packet transferring means, depending on a location of the mobile terminal, without needing cooperation with the lower location managing means. Therefore, when a plurality of lower packet transferring means need to be arranged in a large-scaled home link or when a lower packet transferring means is arranged for each of services provided to a mobile terminal, it is possible to freely arrange a lower packet transferring means.

### First Example

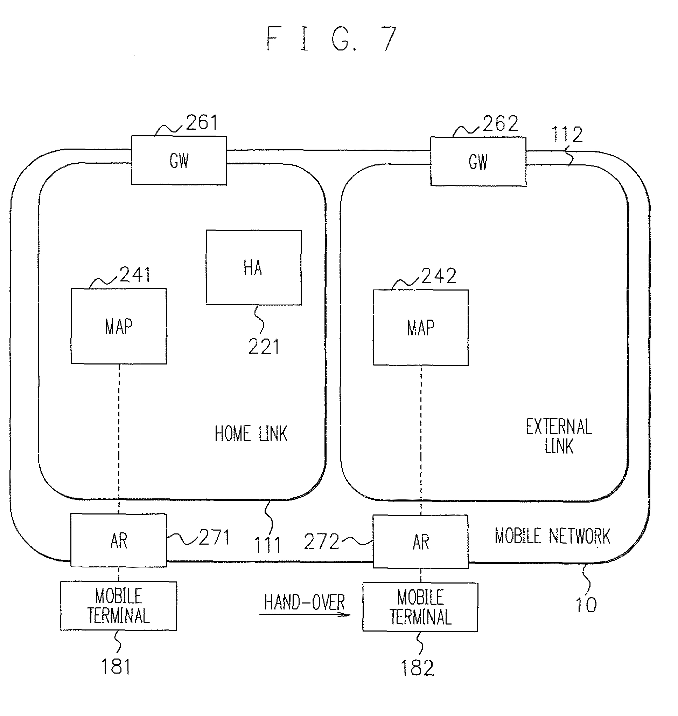

Next, a first example of the present invention is described with reference to FIGs. 7 to 9. The first example of the present invention corresponds to the first exemplary embodiment of the present invention described above and is to describe it in more detail.

FIG. 7 is a schematic diagram illustrating a mobile communication management system according to the first example of the present invention. The mobile communication management system according to the first example of the present invention includes a HA 221, MAPs 241 and 242, ARs 271 and 272, GWs 261 and 262, and mobile terminals 181 and 182. The above components constitute a mobile network 10, and the mobile network 10 includes a home link 111 and an external link 112. Here, "link" means a network which shares a sub network.

The HA 221, the MAP 241, and the GW 261 exist in the home link 111, and the MAP 242 and the GW 262 exist in the external link 112.

The HA 221 is a node which includes the functions of the upper location managing means 121 and the upper packet transferring means 131 according to the first exemplary embodiment of the present invention. The HA 221 includes a function of managing binding information of IP addresses of the mobile terminals 181 and 182 and addresses of the MAPs 241 and 242 which manage the mobile terminals 181 and 182, a function of conferring/depriving a packet proxy-receiving right to/from the MAPs 241 and 242, a function of encapsulating a packet to be forwarded to the IP addresses of the mobile terminals 181 and 182 and transferring it to the MAPs 241 and 242, and a function of proxy-receiving the packet to be forwarded to the IP addresses of the mobile terminals 181 and 182.

The MAPs 241 and 242 are nodes which include the functions of the lower location managing means 141 and 142 and the lower packet transferring means 151 and 152 according to the first exemplary embodiment of the present invention. The MAPs 241 and 242 include a function of managing binding information of the IP addresses of the mobile terminals 181 and 182 and addresses of the ARs 271 and 272 which the mobile terminals 181 and 182 are accessing, a function of registering location information of the mobile terminals 181 and 182 to the HA 221, a function of encapsulating a packet transmitted from the mobile terminals 181 and 182 and transferring it to the HA 221, a function of transferring a packet to be forwarded to the IP addresses of the mobile terminals 181 and 182 to the ARs 271 and 272, and a function of proxy-receiving the packet to be forwarded to the IP addresses of the mobile terminals 181 and 182.

The GWs 261 and 262 are gateways of when the mobile terminals 181 and 182 which have access to the mobile network 10 communicate with a mobile terminal which exists in an external network and include a firewall function.

The ARs 271 and 272 include a function for registering location information of the mobile terminals 181 and 182 to the MAPs 241 and 242, a function of encapsulating a packet transmitted from the mobile terminals 181 and 182 and transferring it to the MAPs 241 and 242, and a function of transferring a packet to be forwarded to the IP addresses of the mobile terminals 181 and 182 to the mobile terminals 181 and 182.

The mobile terminals 181 and 182 are terminals which retain an IP address with the same prefix as the home link 111, and have access to the home link 111 and the external link 112, respectively, through the ARs 271 and 272.

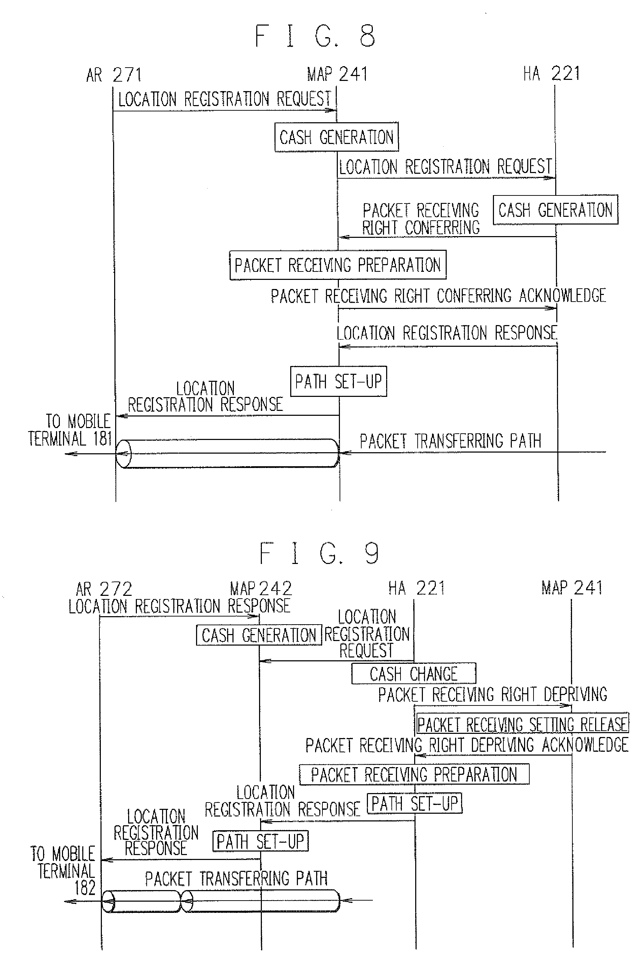

Next, an overall operation according to the first example of the present invention is described with reference to FIGs. 8 and 9. FIG. 8 is a sequence diagram illustrating a flow of a location registration operation of the mobile terminal in the mobile communication management system according to the first example of the present invention, and shows a procedure that the mobile terminal 181 which has access to the home link 111 performs location registration to the HA 221 through the MAP 241.

First, when the mobile terminal 181 accesses the AR 271, the AR 271 transmits a location registration request containing binding information of an IP address of the mobile terminal 181 and an address of the AR 271 to the MAP 241.

The MAP 241 receives the location registration request and then generates a cash for the binding information of the IP address of the mobile terminal 181 and the address of the AR 271, and transmits a location registration request containing binding information of the IP address of the mobile terminal 181 and an address of the MAP 241 to the HA 221.

The HA 221 receives the location registration request and then generates a cash for the binding information of the IP address of the mobile terminal 181 and the address of the MAP 241. The HA 221 compares its prefix to a prefix of the MAP 241, and transmits a packet receiving right conferring message to the MAP 241 if it is determined that the MAP 241 is in the same home link 111 as the HA 221.

The MAP 241 receives the packet receiving right conferring message and then performs preparation for capturing a packet to be forwarded to the mobile terminal 181. Here, if the mobile network is an IPv6 network, as the capturing preparation, the MAP 241 transmits a Neighbor Advertisement message which uses the IP address of the mobile terminal 181 as a target address to the whole node multicast address (FF02::1) of a link local scope with respect to the home link. After the packet receiving preparation is completed, the MAP 241 transmits a packet receiving right conferring acknowledge message to thereby notify the HA 221 that the packet receiving preparation is completed.

The MAP 221 receives the packet receiving right conferring acknowledge message and then transmits a location registration response to the MAP 241 to thereby notify that the location registration of the mobile terminal 181 is completed.

The MAP 241 receives the location registration response and then performs a path set-up so that a packet to be forwarded to the mobile terminal 181 can be encapsulated and transmitted to the AR 271. After the path set-up is completed, the MAP 241 transmits the location registration response to the AR 271, thereby completing the location registration procedure.

By the above-described procedure, the packet to be forwarded to the mobile terminal 181 which has arrived at the home link 111 can be transferred to the mobile terminal 181 without intervention of the HA 221.

FIG. 9 is a sequence diagram illustrating a flow of a location registration operation of the mobile terminal in the mobile communication management system according to the first example of the present invention, and shows a procedure that the mobile terminal 182 which has access to the home link 111 hands over to the external link 112 and the location registration to the HA 221 is performed through the MAP 242.

First, after the mobile terminal 182 accesses the AR 272, the AR 272 transmits a location registration request containing binding information of an IP address of the mobile terminal 182 and an address of the AR 272 to the MAP 242.

The MAP 242 receives the location registration request and then generates a cash for the binding information of the IP address of the mobile terminal 182 and the address of the AR 272, and transmits a location registration request containing binding information of the IP address of the mobile terminal 182 and an address of the MAP 242 to the HA 221.

The HA 221 receives the location registration request and then changes a cash content of the mobile terminal 182 to the binding information of the IP address of the mobile terminal 181 and the address of the MAP 242. The HA 221 compares its prefix to a prefix of the MAP 242, and transmits a packet receiving right depriving message to the MAP 241 in order to release packet receiving setting of the MAP 241 which has captured a packet to be forwarded to the mobile terminal 182 until then if it is determined that the MAP 242 is in the different external link 112 from the HA 221.

The MAP 241 receives the packet receiving right depriving message, and then releases the packet receiving setting with respect to the mobile terminal 182 and transmits a packet receiving right depriving acknowledge message to the HA 221.

The HA 221 receives the packet receiving right depriving acknowledge message and then performs preparation for capturing the packet to be forwarded to the mobile terminal 182. After the packet receiving preparation is completed, the HA 221 performs a path set-up so that the packet to be forwarded to the mobile terminal 182 can be encapsulated and transmitted to the MAP 242. The HA 221 transmits a location registration response to the MAP 242 when the path set-up is completed.

The MAP 242 receives the location registration response and then performs two kinds of path set-up: a set-up for encapsulating the packet to be forwarded to the mobile terminal 182 and transmitting it to the AR 272; and a set-up for encapsulating the packet transmitted from the mobile terminal 182 and transmitting it to the HA 221. After the path set-up is completed, the MAP 242 transmits the location registration response to the AR 272, thereby completing the location registration procedure.

By the above-described procedure, the packet to be forwarded to the mobile terminal 182 which has arrived at the home link 111 can be transferred to the mobile terminal 182 through the HA 221.

In the first example of the present invention, as described above, the packet receiving right is exchanged between the HA 221 and the MAP 241 by transmitting/receiving the packet receiving right conferring message and the packet receiving right conferring acknowledge message between the HA 221 and the MAP 241. However, it may be configured such that the packet receiving right is conferred to the MAP 241 when the MAP 241 receives the location registration response, without using the packet receiving right conferring message and the packet receiving right conferring acknowledge message.

Also, in the first example of the present invention, a two-step hierarchy configuration has been described, but a multi-step hierarchy configuration is also possible. In this instance, a middle node includes a function for registering location information of a mobile terminal to a node which is one step higher than itself in addition to all functions of the upper location managing means.

### Second Example

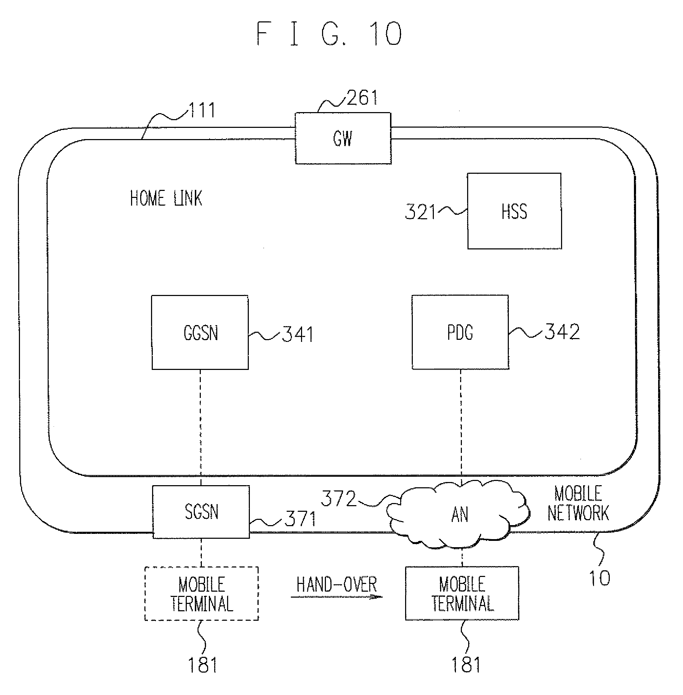

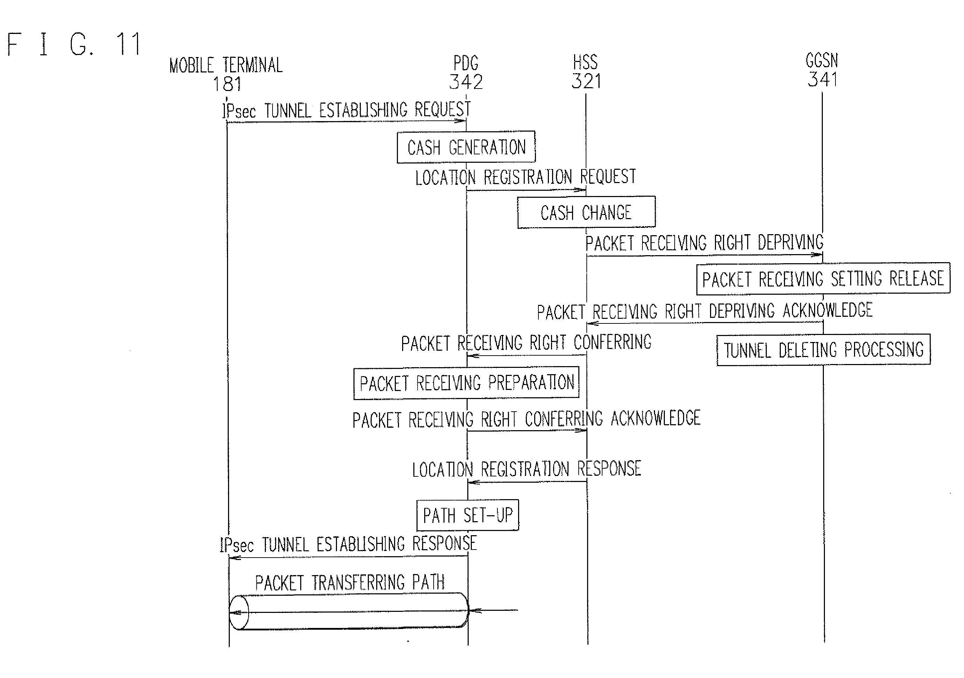

Next, a second example of the present invention is described with reference to FIGs. 10 and 11. The second example of the present invention corresponds to the second exemplary embodiment of the present invention described above, and is to describe it in more detail.

FIG. 10 is a schematic diagram illustrating the mobile communication management system according to the second example of the present invention. The mobile communication management system according to the second exemplary embodiment of the present invention includes a Home Subscriber Server (HSS) 321, a Gateway GPRS Support Node (GGSN) 341, a Serving GPRS Support Node (SGSN) 371, a Packet Data Gateway (PDG) 342, an Access Network (AN) 372, a GW 261, and a mobile terminal 181. The above components constitute a mobile network 10, and the mobile network 10 includes a home link 111.

The HSS 321, the GGSN 341, the PDG 342, and the GW 261 exist in the home link 111.

The HSS 321 is a node with the function of the upper location managing means 121 in the second exemplary embodiment of the present invention. The HSS 321 includes a function of managing binding information movement of an IP address of the mobile terminal 181 and an address of the GGSN 341 or the PDG 342 which manages the mobile terminal 181, and a function of conferring/depriving a packet proxy-receiving right to/from the GGSN 341 and the PDG 342.

The GGSN 341 is a node which includes the functions of the lower location managing means 141 and the lower packet transferring means 151 in the second exemplary embodiment of the present invention. The GGSN 341 includes a function of managing binding information of the IP address of the mobile terminal 181 and an address of the SGSN 371 which the mobile terminal 181 is accessing, a function of registering location information of the mobile terminal 181 to the HSS 321, a function of transferring a packet to be forwarded to the IP address of the mobile terminal 181 to the SGSN 371, and a function of proxy-receiving the packet to be forwarded to the IP address of the mobile terminal 181.

The PDG 342 is a node which includes the functions of the lower location managing means 141 and the lower packet transferring means 151 in the second exemplary embodiment of the present invention. The PDG 342 includes a function of managing binding information of the IP address of the mobile terminal 181 and a visiting IP address which the AN 372 which the mobile terminal 181 is accessing provides to the mobile terminal 181, a function of registering location information of the mobile terminal 181 to the HSS 321, a function of transferring a packet to be forwarded to the IP address of the mobile terminal 181 to the visiting IP address which the AN 372 provides to the mobile terminal 181, and a function of proxy-receiving the packet to be forwarded to the IP address of the mobile terminal 181.

An overall operation according to the second example of the present invention is described in detail with reference to FIG. 11. FIG. 11 is a sequence diagram illustrating a flow of a hand-over of the mobile terminal in the mobile communication management system according to the second example of the present invention, and shows a procedure that the mobile terminal 181 which has access to the home link 111 hands over to the AN 372 from the SGSN 371.

First, when the mobile terminal 181 accesses the AN 372, the AN 372 transmits to the PDG 342 a location registration request (IPsec tunnel establishing request in the drawing) containing binding information of the IP address of the mobile terminal 181 and the visiting IP address which the AN 372 provides to the mobile terminal 181.

The PDG 342 receives the location registration request and then generates a cash for the binding information of the IP address of the mobile terminal 181 and the visiting IP address which the AN 372 provides to the mobile terminal 181, and transmits a location registration request containing binding information of the IP address of the mobile terminal 181 and the address of the PDG 342 to the HSS 321.

The HSS 321 receives the location registration request and then changes a cash content of the mobile terminal 181 to the binding information of the IP address of the mobile terminal 181 and the address of the PDG 342. The HSS 321 compares the address of the GGSN 341 registered in a cash before the location registration request is received to the address of the PDG 342 registered in a cash after the location registration request is received, and transmits a packet receiving right depriving message to the GGSN 341 if it is detected that the anchor node of after the location registration request is received is different from the anchor node of before the location registration request is received.

The GGSN 341 receives the packet receiving right depriving message, and then releases the packet receiving setting with respect to the IP address of the mobile terminal and transmits the packet receiving right depriving acknowledge message to the HSS 321. After the message is transmitted, the GGSN 341 performs tunnel deleting processing, thereby deleting a tunnel established to the GGSN 341.

The HSS 321 receives the packet receiving right depriving acknowledge message and then transmits a packet receiving right conferring message to the PDG 342.

The PDG 342 receives the packet receiving right conferring message and then performs preparation for capturing the packet to be forwarded to the mobile terminal 181. After the packet receiving preparation is completed, the PDG 342 transmits a packet receiving right conferring acknowledge message to the HSS 321 to thereby notify that the packet receiving preparation is completed.

The HSS 321 receives the packet receiving right conferring acknowledge message and then transmits a location registration response to the PDG 342 to thereby notify that the location registration of the mobile terminal 181 is completed.

The PDG 42 receives the location registration response and then performs a path set-up so that the packet to be forwarded to the mobile terminal 181 can be encapsulated and transmitted to the visiting IP address which the AN 372 provides to the mobile terminal 181. After the path set-up is completed, the PDG 342 transmits the location registration response to the mobile terminal 181 through the AN 372, thereby completing the location registration procedure.

By the above-described procedure, the packet to be forwarded to the mobile terminal 181 which has arrived at the home link 111 can be transferred to the mobile terminal 181 without intervention of the GGSN 341.

The second example of the present invention performs a change to an anchor node corresponding to an access network when a hand-over is performed between different kinds of access networks, but it may be configured to perform a change to an anchor node specialized for a service when a service content provided to a mobile terminal is changed. For example, a Personal Area Network (PAN) service dedicated anchor node may be used when a mobile terminal is constituting the PAN, and a typical HA may be used when it is not constituting the PAN.

The exemplary embodiments of the present invention described above are preferred exemplary embodiments of the present invention, and the scope of the present invention is not limited to the above described exemplary embodiments. The above described exemplary embodiments may be variously modified without departing from the sprit of the present invention.

### Industrial Applicability

The present invention may be applied to a hierarchical mobility management system which manages mobility, respectively, in an operator network and between the operator networks. Also, the present invention may be applied to an anchor node change corresponding to an access method when a hand-over is performed between different kinds of access networks.

### Brief Description of the Drawings

FIG. 1 is a schematic diagram illustrating a conventional mobile communication management system;
FIG. 2 is a schematic diagram illustrating a mobile communication management system according to an exemplary embodiment of the present invention;
FIG. 3 is a sequence diagram illustrating a flow of a location registration operation of a mobile terminal in the mobile communication management system according to the exemplary embodiment of the present invention;
FIG. 4 is a sequence diagram illustrating a flow of a location registration operation of the mobile terminal in the mobile communication management system according to the exemplary embodiment of the present invention;
FIG. 5 is a schematic diagram illustrating a mobile communication management system according to the exemplary embodiment of the present invention;
FIG. 6 is a sequence diagram illustrating a flow of a location registration operation of the mobile terminal in the mobile communication management system according to the exemplary embodiment of the present invention;
FIG. 7 is a schematic diagram illustrating a mobile communication management system according to the exemplary embodiment of the present invention;
FIG. 8 is a sequence diagram illustrating a flow of a location registration operation of the mobile terminal in the mobile communication management system according to the exemplary embodiment of the present invention;
FIG. 9 is a sequence diagram illustrating a flow of a location registration operation of the mobile terminal in the mobile communication management system according to the exemplary embodiment of the present invention;
FIG. 10 is a schematic diagram illustrating a mobile communication management system according to the exemplary embodiment of the present invention; and
FIG. 11 is a sequence diagram illustrating a flow of a location registration operation of the mobile terminal in the mobile communication management system according to the exemplary embodiment of the present invention.

### Description of Reference Numerals

- 10: Mobile network
- 11: Home network
- 12: Visiting network
- 21,: 221 HA (Home Agent)
- 31,: 32, 241, 242 MAP (Mobility Anchor Point)
- 41,: 42, 271, 272 AR (Access Router)
- 51,: 52, 261, 262 GW (Gateway)
- 61,62: Mobile terminal
- 110: Top-level network
- 111: Home link
- 112: External link
- 121: Upper location managing means
- 131: Upper packet transferring means
- 141,: 142 Lower location managing means
- 151,: 152 Lower packet transferring means
- 161,: 162 GW means
- 171,: 172 AR means
- 181,: 182 Mobile terminal
- 321: HSS (Home Subscriber Server)
- 341: GGSN (Gateway GPRS Support Node)
- 342: PDG (Packet Data Gateway)
- 371: SGSN (Serving GPRS Support Node)
- 372: AN (Access Network)

## Claims

1. A mobile communication management system, comprising:
a mobile terminal including a communication function and retaining an IP address on a home network;
an upper location managing means which includes a function of managing binding information of the IP address of the mobile terminal and addresses of a lower location managing means and a lower packet transferring means, and a function of managing location information of the mobile terminal;
the lower location managing means which includes a function of managing binding information of the IP address of the mobile terminal and location information of the mobile terminal and a function of registering the location information of the mobile terminal to the upper location managing means; and
the lower packet transferring means which includes a function of transferring a packet to be forwarded to the IP address of the mobile terminal to the location information of the mobile terminal based on the binding information managed by the lower location managing means and a function of proxy-receiving the packet to be forwarded to the IP address of the mobile terminal,
wherein the upper location managing means dynamically changes an anchor node by conferring and depriving a packet receiving right which is a right to perform packet proxy-receiving processing for each IP address of the mobile terminal with respect to the lower location managing means.

2. The mobile communication management system of claim 1, wherein the upper location managing means accepts registration of the location information of the mobile terminal by the lower location managing means, detects a change from an address of the lower location managing means managed before the registration to an address of the lower location managing means of after the registration, deprives the packet receiving right from the lower location managing means of before the registration, and confers the packet receiving right to the lower location managing means of after the registration.

3. The mobile communication management system of claim 2, wherein the lower location managing means includes a function of performing a packet proxy-receiving control to the lower packet transferring means, and the packet proxy-receiving control contains a control for performing setting of packet proxy-receiving and releasing of the setting with respect to the lower packet transferring means.

4. The mobile communication management system of claim 3, wherein the lower location managing means performs releasing of the packet proxy-receiving setting with respect to the lower packet transferring means after deprivation of the packet receiving right is performed by the upper location managing means.

5. The mobile communication management system of claim 4, wherein the upper location managing means confers the packet receiving right to the lower location managing means after releasing of the packet proxy-receiving setting is performed by the lower packet transferring means.

6. The mobile communication management system of claim 5, wherein the lower location managing means performs setting of the packet proxy-receiving with respect to the lower packet transferring means after conferring of the packet receiving right is performed by the upper location managing means.

7. A mobile communication management system, comprising:
a mobile terminal including a communication function and retaining an IP address on a home network;
an upper location managing means which includes a function of managing binding information of the IP address of the mobile terminal and addresses of a lower location managing means and a lower packet transferring means and a function of managing location information of the mobile terminal;
an upper packet transferring means which includes a function of transferring a packet to be forwarded to the IP address of the mobile terminal to the lower packet transferring means and a function of proxy-receiving the packet to be forwarded to the IP address of the mobile terminal;
the lower location managing means which includes a function of managing binding information of the IP address of the mobile terminal and location information of the mobile terminal and a function of registering the location information of the mobile terminal to the upper location managing means; and
the lower packet transferring means which includes a function of transferring the packet to be forwarded to the IP address of the mobile terminal to the location information of the mobile terminal based on the binding information managed by the lower location managing means and a function of proxy-receiving the packet to be forwarded to the IP address of the mobile terminal,
wherein the upper location managing means dynamically changes an anchor node by conferring and depriving a packet receiving right which is a right to perform packet proxy-receiving processing for each IP address of the mobile terminal with respect to the lower location managing means.

8. The mobile communication management system of claim 7, wherein the upper location managing means and the upper packet transferring means exist on a home network.

9. The mobile communication management system of claim 8, wherein the upper location managing means accepts registration of the location information of the mobile terminal by the lower location managing means, deprives the packet receiving right from the lower location managing means of before the registration which is on the home network if detecting a change from an address of the lower location managing means on the home network managed before the registration to an address of the lower location managing means of after the registration which exists on an external network, deprives the packet receiving right from the lower location managing means of before the registration if detecting a change from an address of the lower location managing means of before the registration to an address of the lower location managing means of after the registration in the home network, and confers the packet receiving right to the lower location managing means of after the registration.

10. The mobile communication management system of claim 9, wherein the upper location managing means accepts registration of the location information of the mobile terminal by the lower location managing means, detects that an address of the lower location managing means of after the registration exists on the home network, and confers the packet receiving right to the lower location managing means of after the registration.

11. The mobile communication management system of claim 10, wherein the upper location managing means includes a function of performing a packet proxy-receiving control to the upper packet transferring means, the lower location managing means includes a function of performing a packet proxy-receiving control to the lower packet transferring means, and the packet proxy-receiving control contains a control for performing setting of packet proxy-receiving and releasing of the setting with respect to the upper packet transferring means and the lower packet transferring means.

12. The mobile communication management system of claim 11, wherein the lower location managing means performs releasing of the packet proxy-receiving setting with respect to the lower packet transferring means after deprivation of the packet receiving right is performed by the upper location managing means.

13. The mobile communication management system of claim 12, wherein after releasing of the packet proxy-receiving setting is performed by the lower packet transferring means, the upper location managing means has an upper packet transferring function perform setting the packet proxy-receiving or confers the packet receiving right to the lower location managing means to have the lower packet transferring means perform setting of the packet proxy-receiving.
